# EUROPÄISCHE PATENTANMELDUNG

(11) **EP 4 671 832 A1**
(43) Veröffentlichungstag der Anmeldung: **31.12.2025**
(21) Anmeldenummer: 24185239.1
(22) Anmeldetag: 28.06.2024
(51) Int. Cl.: G01V 8/20, F16P 3/14

(54) **ÜBERWACHUNGSEINRICHTUNG**

(71) Anmelder: Leuze electronic GmbH + Co. KG, 73277 Owen/Teck (DE)
(72) Erfinder: Halbherr, Kim, 73734 Esslingen (DE); Jüttner, Andreas, 81543 München (DE); Pfeil, Albrecht, 73230 Kirchheim unter Teck (DE); Brunner, Rolf, 82223 Eichenau (DE)
(74) Vertreter: Ruckh, Rainer Gerhard

(57) **Zusammenfassung**

Die Erfindung betrifft eine Überwachungseinrichtung (10) mit einem Sicherheitssensor in Form eines Lichtvorhangs (1) und mit einer Sicherheitssteuerung (14), die über eine sichere Datenverbindung (17) mit dem Lichtvorhang (1) verbunden ist. Der Lichtvorhang (1) weist eine Reihenanordnung von Strahlachsen (S1-S12) bildenden Sender-Empfänger-Paaren auf, mittels derer ein Überwachungsbereich überwacht wird. In der Sicherheitssteuerung (14) sind ein Funktionsbaustein (18) und Konfigurationsmittel vorhanden, mittels derer Bereiche (B1, B2, B3) des Lichtvorhangs (1) mit jeweils einer vorgegebenen Anzahl von Strahlachsen (S1-S12) vorgegeben werden. Diese Bereiche (B1, B2, B3) sind als Eingangssignale dem Funktionsbaustein (18) zugeführt. Der Lichtvorhang (1) erzeugt für jeden Bereich (B1, B2, B3) ein Ausgangssignal, wobei die Ausgangssignale über die sichere Datenverbindung (17) in den Funktionsbaustein (18) eingelesen werden. Der Funktionsbaustein (18) generiert abhängig von den Ausgangssignalen ein Schaltsignal.

## Beschreibung

Die Erfindung betrifft eine Überwachungseinrichtung und ein Verfahren zum Betrieb einer Überwachungseinrichtung.

Derartige Überwachungseinrichtungen weisen einen Sicherheitssensor in Form eines Lichtvorhangs und eine Sicherheitssteuerung, die über eine sichere Datenverbindung an den Lichtvorhang angeschlossen ist, auf.

Der Begriff "sicher" bedeutet in diesem Fall, dass die jeweiligen Einheiten einen fehlersicheren Aufbau aufweisen und dabei die relevanten normativen Anforderungen erfüllen, die insbesondere in den Normen IEC 61508 oder ISO 13849, sowie IEC 61496 festgelegt sind.

Die Sicherheitssteuerung steuert eine Anlage. Mit dem Lichtvorhang wird ein Gefahrenbereich an dieser Anlage abgesichert. Insbesondere wird mit dem Lichtvorhang ein Zugang zum Gefahrenbereich überwacht.

Der Lichtvorhang weist eine Reihenanordnung von Strahlachsen bildenden Sender-Empfänger-Paaren auf, mittels derer ein flächiger, typischerweise in einer Ebene verlaufender Überwachungsbereich überwacht wird. Typischerweise weist der Lichtvorhang eine Sendereinheit, in der eine Reihenanordnung von Lichtstrahlen emittierenden Sendern integriert ist, und eine Empfängereinheit mit einer Reihenanordnung von Lichtstrahlen empfangenden Empfängern und einer Auswerteeinheit auf. Bei freiem Überwachungsbereich treffen die Lichtstrahlen jedes Senders auf einen zugeordneten Empfänger, welche somit ein Sender-Empfänger-Paar und eine Strahlachse des Lichtvorhangs bilden. Bei einem Obj ekteingriff in dem Überwachungsbereich werden durch das Objekt die Lichtstrahlen wenigstens einer Strahlachse unterbrochen.

Abhängig davon, ob ein Objekt im Überwachungsbereich vorhanden ist, generiert der Lichtvorhang ein Schaltsignal, in Abhängigkeit dessen die Sicherheitssteuerung die Anlage steuert. Befindet sich kein Objekt im Überwachungsbereich, ist das Schaltsignal in einem Schaltzustand, mit dem der Betrieb der Anlage freigegeben wird. Wird mit dem Lichtvorhang ein Objekt im Überwachungsbereich detektiert, wird mit dem Lichtvorhang ein Abschaltsignal, das heißt ein Schaltsignal mit einem Schaltzustand generiert, mit dem eine Sicherheitsfunktion derart ausgelöst wird, dass die Anlage stillgesetzt wird. Damit gehen von der Anlage keine Gefahren mehr aus, so dass insbesondere für eine Person, die durch den Überwachungsbereich des Lichtvorhangs in den Gefahrenbereich gelangt, keine Gefahr mehr besteht.

Typischerweise ist es während des Betriebs der Anlage erforderlich, dass nicht sicherheitskritische Objekte wie Paletten, Kisten oder dergleichen der Anlage zugeführt werden müssen. Hierzu müssen diese nicht sicherheitskritischen Objekte den Überwachungsbereich des Lichtvorhangs passieren.

Eine Auslösung der Sicherheitsfunktion wäre in diesem Fall unnötig und würde die Verfügbarkeit der Anlage durch ein unnötiges Stillsetzen durch eine Generierung eines Abschaltsignals im Lichtvorhang unnötig einschränken.

Um ein derartiges unnötiges Stillsetzen der Anlage zu vermeiden, ist es bekannt, den Lichtvorhang in einem Mutingbetrieb zu betreiben.

Hierzu werden mit geeigneten Muting-Sensoren nicht sicherheitskritische Objekte erkannt und identifiziert, bevor sie in den Überwachungsbereich eindringen. Abhängig von den Signalen der Muting-Sensoren wird der Lichtvorhang für ein vorgegebenes Zeitintervall, in dem ein nicht sicherheitskritisches Objekt den Überwachungsbereich passiert, gemutet, das heißt stumm geschaltet, was bedeutet, dass die Sicherheitsfunktion des Lichtvorhangs überbrückt wird, das heißt der Lichtvorhang generiert kein Abschaltsignal, wenn das nicht sicherheitskritische Objekt den Überwachungsbereich passiert.

Bei einem Muting wird im einfachsten Fall der gesamte Lichtvorhang gemutet, so dass unabhängig davon, welche und wieviele Strahlachsen des Lichtvorhangs durch das nicht sicherheitskritische Objekt unterbrochen werden, die Sicherheitsfunktion des Lichtvorhangs überbrückt wird.

Generell ist es auch bekannt, ein partielles Muting durchzuführen. In diesem Fall wird nur ein Teil der Strahlachsen des Lichtvorhangs gemutet, so dass ein Eindringen eines Objekts in den Bereich dieser Strahlachsen nicht zur Auslösung der Sicherheitsfunktion führt. Die restlichen Strahlachsen des Lichtvorhangs werden nicht gemutet, was bedeutet, dass ein Eindringen eines Objekts in den Bereich dieser Strahlachsen zum Auslösen der Sicherheitsfunktion führt.

Dieses partielle Muting ist dann sinnvoll, wenn die Größen von sicherheitskritischen Objekten bekannt sind, so dass dann nur der Bereich der Strahlachsen gemutet wird, die von diesen bekannten nicht sicherheitskritischen Objekten unterbrochen werden. Für die restlichen Strahlachsen bleibt die Überwachungsfunktion des Lichtvorhangs erhalten, was die Sicherheit der Überwachungseinrichtung erhöht.

So können beispielsweise Manipulationen derart erkannt werden, dass eine Person auf einem nicht sicherheitskritischen Objekt wie einer Kiste sitzend versucht den Überwachungsbereich des Lichtvorhangs zu passieren. Der Lichtvorhang ist zwar bei Passieren des nicht sicherheitskritischen Objekts partiell gemutet, jedoch nicht in dem Bereich, in dem sich die Person befindet, so dass die Person vom Lichtvorhang als nicht zulässiges Objekt erkannt wird, was zur Auslösung der Sicherheitsfunktion führt.

Der Erfindung liegt die Aufgabe zugrunde, eine Überwachungseinrichtung mit hoher Funktionalität bereitzustellen.

Zur Lösung dieser Aufgabe sind die Merkmale der unabhängigen Ansprüche beschrieben. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor in Form eines Lichtvorhangs und mit einer Sicherheitssteuerung, die über eine sichere Datenverbindung mit dem Lichtvorhang verbunden ist. Der Lichtvorhang weist eine Reihenanordnung von Strahlachsen bildenden Sender-Empfänger-Paaren auf, mittels derer ein Überwachungsbereich überwacht wird. In der Sicherheitssteuerung sind ein Funktionsbaustein und Konfigurationsmittel vorhanden, mittels derer Bereiche des Lichtvorhangs mit jeweils einer vorgegebenen Anzahl von Strahlachsen vorgegeben werden. Diese Bereiche sind als Eingangssignale dem Funktionsbaustein zugeführt. Der Lichtvorhang erzeugt für jeden Bereich ein Ausgangssignal, wobei die Ausgangssignale über die sichere Datenverbindung in den Funktionsbaustein eingelesen werden. Der Funktionsbaustein generiert abhängig von den Ausgangssignalen ein Schaltsignal.

Die Erfindung betrifft auch ein entsprechendes Verfahren.

Die erfindungsgemäße Überwachungseinrichtung umfasst als wesentliche Sicherheitskomponenten einen Sicherheitssensor in Form eines Lichtvorhangs, eine Sicherheitssteuerung sowie eine sichere Datenverbindung, die den Sicherheitssensor mit der Sicherheitssteuerung verbindet und eine bidirektionale Datenübertragung zwischen den beiden Einheiten ermöglicht.

Vorteilhaft werden zwischen dem Lichtvorhang und dem Funktionsbaustein zyklisch Prozessdaten ausgetauscht.

Dabei sendet der Funktionsbaustein zyklisch Daten als Ausgangsdaten an den Lichtvorhang, wobei der Funktionsbaustein zyklisch Daten als Eingangsdaten vom Lichtvorhang empfängt.

Die Eingangsdaten sind zum einen von den Ausgangssignalen der einzelnen Bereiche gebildet. Zudem können Ausgangsdaten von Zustandsdaten des Lichtvorhangs gebildet sein. Die Ausgangsdaten können insbesondere aus Steuerbefehlen zur Steuerung von Funktionen des Lichtvorhags gebildet sein.

Vorteilhaft ist die sichere Datenverbindung von einem sicheren Feldbus auf Ethernet-Basis, von einem IO-Link-Safety-Modul oder einem AS-i Safety-Modul gebildet.

Diese Sicherheitskomponenten sind sicher im Sinne von fehlersicher, das heißt sie erfüllen die normativen Anforderungen der für den Bereich der Sicherheitstechnik relevanten Normen, wie zum Beispiel der IEC 61508, ISO 13849 und IEC 61496.

Die Sicherheitssteuerung steuert insbesondere eine Anlage, deren Gefahrenbereich mit dem Lichtvorhang abgesichert wird. Der Lichtvorhang weist eine Reihenanordnung von Strahlachsen bildenden Sender-Empfänger-Paaren auf, die sich zu einem flächigen, insbesondere ebenen Überwachungsbereich ergänzen, der vom Lichtvorhang überwacht wird.

Erfindungsgemäß ist in der Sicherheitssteuerung ein Funktionsbaustein vorhanden, der insbesondere von einem Software-Modul gebildet sein kann. Die Sicherheitssteuerung weist zur Erfüllung der normativen Sicherheitsanforderungen eine redundante zweikanalige Rechnerstruktur auf, auf der vorteilhaft eine redundante, zweikanalige Softwarestruktur vorhanden ist.

Der Funktionsbaustein steuert und kontrolliert den Betrieb des Lichtvorhangs und generiert abhängig von Ausgangssignalen des Lichtvorhangs ein Schaltsignal, mit dem die Anlage gesteuert wird.

Mit dem Funktionsbaustein wird auf konstruktiv einfache Weise der Betrieb der Überwachungseinrichtung gesteuert. Dabei kann mit dem Funktionsbaustein flexibel eine Anpassung an sich verändernde Randbedingungen durchgeführt werden.

Wesentlich hierbei ist, dass mit Konfigurationsmitteln Bereiche des Lichtvorhangs vorgegeben werden, wobei diese Bereiche dem Funktionsbaustein als Eingangssignale zugeführt sind, das heißt die Bereiche sind in dem Funktionsbaustein bekannt.

Gemäß einer ersten Variante sind die Konfigurationsmittel von der Sicherheitssteuerung gebildet, wobei mittels Prozessdaten eine Parametrierung des Lichtvorhangs durchgeführt wird.

Die Parametrierung kann in diesem Fall fortlaufend erfolgen.

Gemäß einer zweiten Variante sind die Konfigurationsmittel von einem anwenderprogrammierbaren Konfigurationsprogramm gebildet, mittels dessen eine Parametrierung des Lichtvorhangs dadurch durchgeführt wird, dass ein Parametersatz in eine Speichereinheit des Lichtvorhangs eingelesen wird.

Die Parametrierung erfolgt in diesem Fall azyklisch, vorteilhaft einmalig während der Inbetriebnahme des Lichtvorhangs. Das Konfigurationsprogramm kann auf einem PC, Tablet, Smartphone oder dergleichen installiert sein.

Vorteilhaft werden durch eine Parametrierung Größen und Funktionen von Bereichen vorgegeben.

Vorteilhaft wird jedem Bereich eine Kennung zugeordnet, wobei die Kennungen in den Funktionsbaustein eingelesen werden.

Damit sind die Bereiche eindeutig identifizierbar.

Der Lichtvorhang generiert für jeden Bereich ein Ausgangssignal, wobei insbesondere das Ausgangssignal angibt, ob in dem jeweiligen Bereich ein Objekt vorhanden ist oder nicht. Dabei werden die Ausgangssignale in einer Auswerteeinheit des Lichtvorhangs, welche die Empfangssignale der Empfänger der Sender-Empfänger-Paare auswertet, generiert. Zur Erfüllung der normativen Sicherheitsanforderungen besteht die Auswerteeinheit aus einer redundanten, insbesondere zweikanaligen Rechnerstruktur.

Diese Ausgangssignale werden in den Funktionsbaustein eingelesen. Abhängig von diesen Ausgangssignalen generiert der Funktionsbaustein ein Schaltsignal mit dem die Anlage gesteuert wird.

Die einzelnen Bereiche des Lichtvorhangs können über die Konfigurationsmittel, insbesondere die Sicherheitssteuerung flexibel und schnell, vorzugsweise in Echtzeit vorgegeben werden. Entsprechend erfolgt eine schnelle Anpassung der Auswertung der Ausgangssignale des Lichtvorhangs in dem Funktionsbaustein. Mit dem in dem Funktionsbaustein generierten Schaltsignal kann insbesondere eine Sicherheitsfunktion ausgelöst werden, wenn mit dem Lichtvorhang innerhalb eines bestimmten Bereichs ein sicherheitskritischer Obj ekteingriff im Überwachungsbereich registriert wird.

Durch unterschiedliche Größen und Funktionen von Bereichen kann die Funktionalität des Lichtvorhangs flexibel vorgegeben und bei Bedarf geändert werden.

Die Vorgabe der Bereiche kann generell frei derart vorgegeben werden, dass die einzelnen Bereiche direkt aneinander anschließen. Auch überlappende Bereiche sind möglich.

Vorteilhaft wird jedem Bereich des Lichtvorhangs eine bestimmte Funktion zugeordnet.

Eine mögliche Funktion eines Bereichs ist eine Standard-Funktion. Diese besteht darin, dass dann, wenn eine unterbrochene Strahlachse registriert wird, als Ausgangssignal ein Schaltsignal generiert wird, mit dem eine Sicherheitsfunktion ausgelöst wird, insbesondere die Anlage stillgesetzt wird.

Im einfachsten Fall, wenn der gesamte Lichtvorhang in einem Standard-Betrieb betrieben wird, erstreckt sich dieser Bereich über alle Strahlachsen des Lichtvorhangs.

Weiterhin kann wenigstens ein Bereich mit der Funktion reduzierter Auflösung betrieben werden. Diese Funktion dient dazu, kleinere Objekte zu ignorieren, d.h. nur größere Objekte sollen erkannt werden. In einem solchen Bereich wird nicht jede Strahlachse ausgewertet, sondern nur jede N-te Strahlachse (N ≥ 2).

Weiterhin kann wenigstens ein Bereich mit der Funktion "festes Blanking" betrieben werden. Bei festem Blanking wird ein bestimmtes, feststehendes Muster von unterbrochenen Strahlachsen gefordert. Im Lichtvorhang wird ständig überprüft, ob dieses Muster vorhanden ist. Ist dies nicht der Fall, generiert der Lichtvorhang für diesen Bereich ein Ausgangssignal, das zum Auslösen der Sicherheitsfunktion führt.

Ein Beispiel für festes Blanking ist, dass Strahlachsen oder Strahlachsen des Bereichs dauerhaft unterbrochen sein müssen.

Weiterhin kann wenigstens ein Bereich mit der Funktion "variables Blanking" (Floating Blanking) betrieben werden. Variables Blanking unterscheidet sich von festem Blanking dadurch, dass das geforderte Muster von unterbrochenen Strahlachsen sich in der Position innerhalb des Lichtvorhangs mit der Zeit ändert.

Ist beispielsweise der Lichtvorhang derart montiert, dass ein Gegenstand wie zum Beispiel ein Fördermittel dauerhaft in den Überwachungsbereich ragt, so kann dieses mit einem derartigen Bereich ausgeblendet werden, so dass sichergestellt ist, dass der dauerhaft in den Überwachungsbereich ragende Gegenstand nicht zur Auslösung der Sicherheitsfunktion führt.

Besonders vorteilhaft können mit der erfindungsgemäßen Überwachungseinrichtung unterschiedliche Mutingfunktionen realisiert werden, wodurch eine flexible Anpassung an unterschiedliche nicht sicherheitskritische Objekte, die durch den Überwachungsbereich gefördert werden müssen ohne eine die Anlage stillsetzende Sicherheitsfunktion auszulösen, ermöglicht wird.

Dabei wird mit dem Funktionsbaustein der gesamte Lichtvorhang gemutet oder mit dem Funktionsbaustein ein partielles Muting des Lichtvorhangs durchgeführt.

Generell ist bei einem Muting das Auslösen der Sicherheitsfunktion überbrückt.

Zur Bereitstellung einer Mutingfunktion ist wenigstens einer der Bereiche des Lichtvorhangs ein Muting-Bereich.

Dabei kann als Zusatzbedingung gefordert sein, dass eine Strahlachse nicht in einem Muting-Bereich vorhanden sein darf.

Der Muting-Bereich kann durch die Konfigurationsmittel flexibel und an Größen von nicht sicherheitskritischen Objekten angepasst vorgegeben werden.

Die Funktionsweise des Funktionsbausteins ist generell derart, dass dieser dann eine Sicherheitsfunktion auslöst, wenn in einem nicht gemuteten Bereich des Lichtvorhangs ein Objekteingriff registriert wird.

Wird dagegen mit dem Lichtvorhang in einem Muting-Bereich ein Objekteingriff registriert, löst der Funktionsbaustein keine Sicherheitsfunktion aus, das heißt im Muting-Bereich ist der Lichtvorhang stummgeschaltet.

Dieses Muting wird vorteilhaft nur für eine begrenzte Zeit aufrechterhalten, und zwar für ein Zeitintervall, welches ein nicht sicherheitskritisches Objekt benötigt, um den Überwachungsbereich des Lichtvorhang zu passieren.

Hierzu werden von der Sicherheitssteuerung Muting-Steuersignale in den Funktionsbaustein eingelesen, wobei abhängig von den Muting-Steuersignalen in dem Funktionsbaustein ein Muting des Lichtvorhangs durchgeführt wird.

Dabei werden die Muting-Steuersignale in der Sicherheitssteuerung oder von an die Sicherheitssteuerung angeschlossenen externen Sensoren generiert.

Durch diese Zeitsteuerung kann die Sicherheitssteuerung das Muting zeitgenau an unterschiedliche nicht sicherheitskritische Objekte, die nacheinander durch den Überwachungsbereich des Lichtvorhangs gefördert werden, anpassen. Da die einzelnen nicht sicherheitskritischen Objekte und die Zeiten, in welchen die nichtsicherheitskritischen Objekte durch den Überwachungsbereich des Lichtvorhangs gefördert werden, in der Sicherheitssteuerung bekannt sind, sind in der Sicherheitssteuerung alle Informationen vorhanden, die für die Muting-Steuerung benötigt werden. Insbesondere sind auch die Größen der nicht sicherheitskritischen Objekte in der Sicherheitssteuerung bekannt, so dass diese die Muting-Bereiche an die Größen der nicht sicherheitskritischen Objekte anpassen kann.

Die Erfindung wird im Folgenden anhand der Zeichnungen erläutert. Es zeigen:
- Figur 1:: Schematische Darstellung eines Lichtvorhangs.
- Figur 2:: Ausführungsbeispiel der erfindungsgemäßen Überwachungseinrichtung.
- Figur 3:: Teilausschnitt der Überwachungseinrichtung gemäß Figur 2.
- Figur 4:: Teilausschnitt der Überwachungseinrichtung gemäß Figur 2 bei Transport eines ersten nicht sicherheitskritischen Objekts.
- Figur 5:: Teilausschnitt der Überwachungseinrichtung gemäß Figur 2 bei Transport eines zweiten nicht sicherheitskritischen Objekts.

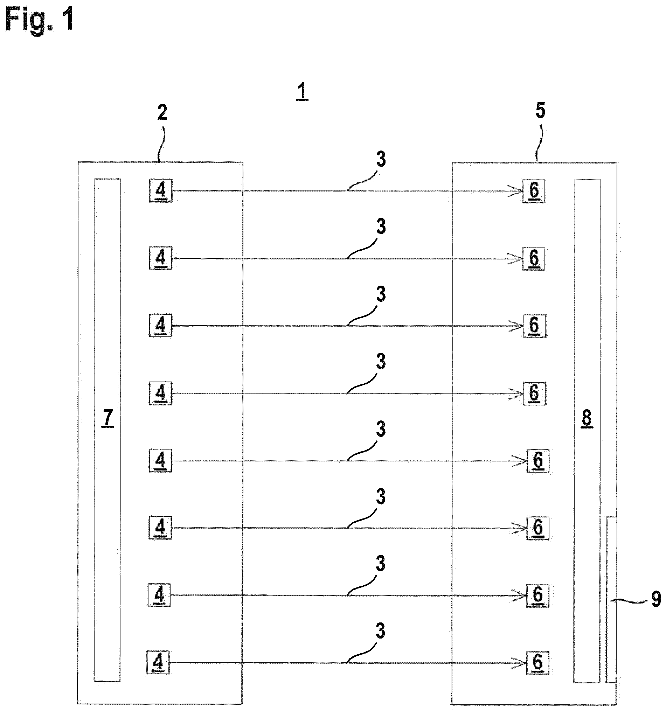

Figur 1 zeigt den Aufbau eines Lichtvorhangs 1. Der Lichtvorhang 1 umfasst eine Sendereinheit 2, in deren Gehäuse eine Reihenanordnung von Lichtstrahlen 3 emittierenden Sendern 4 angeordnet ist. Der Lichtvorhang 1 weist weiterhin eine Empfängereinheit 5 auf, in deren Gehäuse eine Reihenanordnung von Lichtstrahlen 3 empfangenden Empfängern 6 vorgesehen ist.

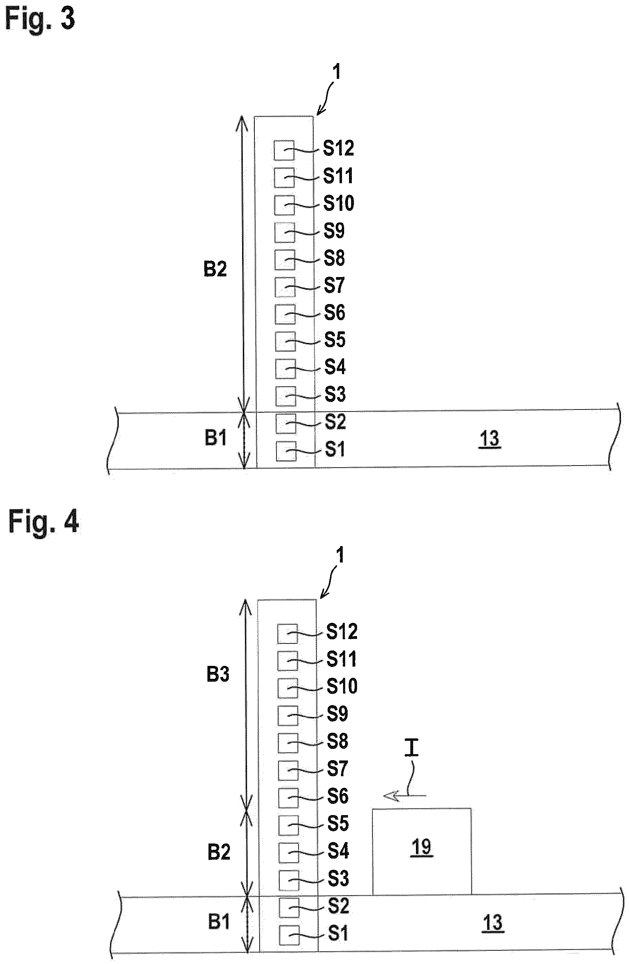

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils ein Sender-Empfänger-Paar und eine Strahlachse S1-S12 des Lichtvorhangs 1, wobei die Strahlachsen S1-S12 des Lichtvorhangs 1 in den Figuren 3 bis 5 mit S1-S12 bezeichnet sind. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen S1-S12 werden durch eine optische Synchronisierung des Lichtvorhangs 1 zyklisch einzeln oder zu mehreren nacheinander aktiviert. Mit den parallel verlaufenden Lichtstrahlen 3 der Strahlachsen S1-S12 wird ein in einer Ebene verlaufender Überwachungsbereich überwacht. In Figur 1 ist beispielhaft ein Lichtvorhang 1 mit acht Strahlachsen S1-S12 dargestellt.

In der Auswerteeinheit 8 werden hierzu die Empfangssignale der Empfänger 6 ausgewertet. Abhängig hiervon werden in der Auswerteeinheit 8 Ausgangssignale generiert, die über eine Ausgangsstruktur 9 ausgegeben werden.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

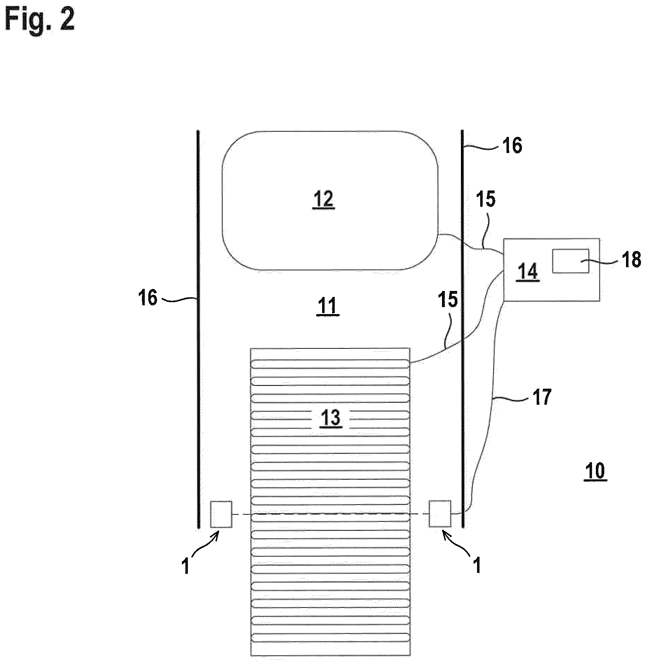

Der einen Sicherheitssensor bildendende Lichtvorhang 1 ist Bestandteil einer Überwachungseinrichtung 10, die beispielhaft in Figur 2 dargestellt ist. Figur 2 zeigt die Komponenten der Überwachungseinrichtung 10 stark schematisiert in einer Draufsicht von oben.

Die Überwachungseinrichtung 10 dient zur Absicherung einer Anlage 11, die im vorliegenden Fall eine Maschine 12 und ein Förderband 13 aufweist, die beide von einer Sicherheitssteuerung 14 gesteuert werden, wobei die Sicherheitssteuerung 14 hierzu über Leitungen 15 mit der Maschine 12 und dem Antrieb des Förderbands 13 verbunden ist.

Ein Gefahrenbereich im Vorfeld der Maschine 12 ist seitlich mit einer Umzäumung 16 geschützt. Somit ist nur über die offene Frontseite des Gefahrenbereichs ein Zutritt zum Gefahrenbereich möglich. Dieser Zugangsbereich ist mit dem Lichtvorhang 1 gemäß Figur 1 abgesichert. Die Gehäuse des Lichtvorhangs 1 sind mit in vertikaler Richtung verlaufenden Längsachsen aufgestellt, so dass der Überwachungsbereich in einer vertikalen Ebene verläuft.

Die Sicherheitssteuerung 14 weist einen fehlersicheren Aufbau auf, der zum Beispiel durch eine mehrkanalige Rechnerstruktur realisiert werden kann. Die Sicherheitssteuerung 14 ist über eine sichere Datenverbindung 17 mit dem Lichtvorhang 1 verbunden, so dass zwischen diesen Einheiten eine bidirektionale Datenübertragung ermöglicht ist.

Vorteilhaft ist die sichere Datenverbindung 17 von einem sicheren Feldbus auf Ethernet-Basis, durch eine IO-Link-Safety Kommunikation oder eine AS-i Safety Kommunikation gebildet.

Erfindungsgemäß ist in der Sicherheitssteuerung 14 ein Funktionsbaustein 18 in Form eines Softwaremoduls vorhanden.

Durch Konfigurationsmittel, die von einem anwenderprogrammierbaren Konfigurationsprogramm oder von der Sicherheitssteuerung 14 selbst gebildet sein können, können Bereichseinteilungen für den Lichtvorhang 1 vorgegeben werden. Beispiele für derartige Bereiche B1, B2, B3 sind in den Figuren 3 bis 5 dargestellt, wobei dort ein Lichtvorhang 1 mit zwölf Strahlachsen S1-S12 dargestellt ist.

In der Sicherheitssteuerung 14 können unterschiedliche Bereichseinteilungen für den Lichtvorhang 1 abgespeichert werden, wobei bei Bedarf eine der Bereichseinteilungen aktiviert werden kann. Die aktivierte Bereichseinteilung wird dem Funktionsbaustein 18 als Eingangssignal zugeführt. Den einzelnen Bereichen B 1, B2, B3 sind Kennungen zugeordnet, anhand derer die Bereiche B 1, B2, B3 im Funktionsbaustein 18 und in der Sicherheitssteuerung 14 eindeutig identifiziert werden können.

Für eine bestimmte Bereichseinteilung sind die Strahlachsen S1-S12 des Lichtvorhangs 1 in unterschiedliche Bereiche B 1, B2, B3 unterteilt. Erfindungsgemäß generiert die Auswerteeinheit 8 für jeden Bereich B1, B2, B3 ein Ausgangssignal, welches angibt, ob sich ein Objekt in diesem Bereich B1, B2, B3 befindet oder nicht.

Diese Ausgangssignale werden in den Funktionsbaustein 18 eingelesen. Abhängig von den Ausgangssignalen generiert der Funktionsbaustein 18 ein binäres Schaltsignal, mit dem die Anlage 11 gesteuert wird.

Figur 3 zeigt die Grundfunktion der Überwachungseinrichtung 10.

Der Lichtvorhang 1 ist so aufgestellt, dass die Lichtstrahlen 3 der untersten beiden Strahlachsen S1, S2 durch das Förderband 13 dauerhaft unterbrochen sind (Bereich B1). Der Bereich B1 bildet einen Bereich "festes Blanking". Die restlichen Strahlachsen S3-S12 sind oberhalb des Förderbands 13 angeordnet und bilden den Bereich B2.

Bei freien Strahlachsen S3-S 12 liegt ein ordnungsgemäßer Betrieb der Überwachungseinrichtung 10 vor, da kein Objekt oder keine Person auf dem Förderband 13 in den Überwachungsbereich eindringt. Die Auswerteeinheit 8 des Lichtvorhangs 1 generiert somit für den Bereich B2 als Ausgangssignal, dass dort kein Objekteingriff vorliegt. Für den Bereich B1 generiert der Lichtvorhang 1 als Ausgangssignal, dass die Strahlachsen S1, S2 unterbrochen sind, was der ordnungsgemäßen Ausrichtung des Lichtvorhangs 1 entspricht.

Abhängig von diesen Ausgangssignalen generiert der Funktionsbaustein 18 ein Schaltsignal, mit dem der Betrieb der Anlage 11 freigegeben ist.

Dringt ein Objekt oder eine Person in den Überwachungsbereich ein, so wird wenigstens eine der Strahlachsen S3-S 12 unterbrochen. Der Lichtvorhang 1 generiert für den Bereich B2 ein entsprechendes Ausgangssignal. Abhängig hiervon löst der Funktionsbaustein 18 eine Sicherheitsfunktion aus, indem der Funktionsbaustein 18 als Schaltsignal ein Abschaltsignal generiert, mit dem die Anlage 11 stillgesetzt wird. Damit gehen von der Anlage 11 keine Gefahren mehr aus.

Für den Fall, dass nicht sicherheitskritische Objekte auf dem Förderband 13 den Überwachungsbereich passieren, ist ein Stillsetzen der Anlage 11 unerwünscht, da die nicht sicherheitskritischen Objekte bei Eindringen in den Gefahrenbereich keine Gefahren verursachen.

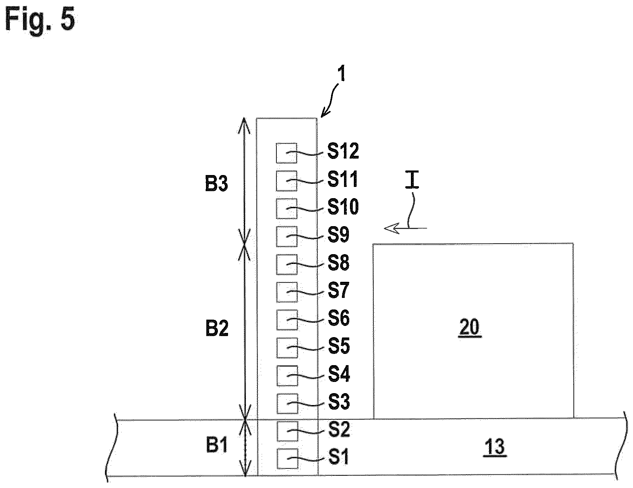

Derartige nicht sicherheitskritische Objekte in Form von Kisten 19, 20 sind in den Figuren 4 und 5 dargestellt. Die Förderrichtung der Kisten 19, 20 auf dem Förderband 13 ist mit dem Pfeil I gekennzeichnet.

Um ein Stillsetzen der Anlage 11 zu vermeiden, wenn ein nicht sicherheitskritisches Objekt den Überwachungsbereich des Lichtvorhangs 1 passiert, weist die Überwachungseinrichtung 10 eine Mutingfunktion auf. Mit der Mutingfunktion wird der Lichtvorhang 1 partiell oder vollständig gemutet, so dass ein Eindringen eines nicht sicherheitskritischen Objekts in einen Muting-Bereich des Lichtvorhangs 1 keine Sicherheitsfunktion auslöst, das heißt der Lichtvorhang 1 ist gemutet, das heißt stummgeschaltet.

Zur Durchführung des Mutings werden von der Sicherheitssteuerung 14 Muting-Steuersignale in den Funktionsbaustein 18 eingelesen, wobei abhängig von den Muting-Steuersignalen in dem Funktionsbaustein 18 ein Muting des Lichtvorhangs 1 durchgeführt wird.

Dabei werden die Muting-Steuersignale in der Sicherheitssteuerung 14 oder von an die Sicherheitssteuerung 14 angeschlossenen externen Sensoren generiert.

Das Muting des Lichtvorhangs 1 wird damit genau dann aktiviert, wenn ein nicht sicherheitskritisches Objekt den Überwachungsbereich des Lichtvorhangs 1 passiert, wobei die Größe des Muting-Bereichs an die Größe des jeweiligen nicht sicherheitskritischen Objekts angepasst ist.

Dies ist in den Figuren 4 und 5 veranschaulicht.

Figur 4 zeigt eine Bereichseinteilung des Lichtvorhangs 1, die kurz vor Einfahren eines nicht sicherheitskritischen Objekts in Form einer Kiste 19 in den Überwachungsbereich aktiviert wird.

Bei der Bereichseinteilung gemäß Figur 4 ist wieder der Bereich B1 vorhanden, der die dauerhaft vom Förderband 13 unterbrochenen Strahlachsen S1, S2 aufweist.

Weiterhin ist im Lichtvorhang 1 ein Bereich B2 aktiviert, der einen Muting-Bereich bildet. Der Bereich B2 ist anhand seiner Kennung als Muting-Bereich identifizierbar und umfasst die Strahlachsen S3-S5. Weiterhin ist ein oberhalb des Bereichs B2 liegender Bereich B3 aktiviert, der die Strahlachsen S6-S12 umfasst. Der Bereich B3 ist kein Muting-Bereich.

Passiert die Kiste 19 den Überwachungsbereich sind die Strahlachsen S3-S5 im Muting-Bereich, das heißt im Bereich B2 unterbrochen, nicht jedoch im Bereich B3. Damit generiert der Lichtvorhang 1 für den Muting-Bereich ein Ausgangssignal, das einen Objekteingriff meldet. Demgegenüber wird für den Bereich B3 ein Ausgangssignal generiert, das angibt, dass im Bereich B3 kein Objekteingriff vorliegt.

Damit liegt ein gültiges Muting vor, so dass die Sicherheitsfunktion des Lichtvorhangs 1 überbrückt wird und die Kiste 19 kann den Überwachungsbereich des Lichtvorhangs 1 passieren, ohne dass die Anlage 11 stillgesetzt wird.

Würde eine Person versuchen, auf der Kiste 19 sitzend unbemerkt den Überwachungsbereich des Lichtvorhangs 1 zu passieren, würde dies durch einen Objekteingriff im Bereich B3 erkannt. Durch das dadurch für den Bereich B3 generierte Ausgangssignal würde in dem Funktionsbaustein 18 erkannt, dass kein gültiges Muting vorliegt, was zu einem Stillsetzen der Anlage 11 führen würde.

Sobald die Kiste 19 den Überwachungsbereich des Lichtvorhangs 1 passiert hat, wird im Funktionsbaustein 18 beziehungsweise in der Sicherheitssteuerung 14 das Muting beendet und es wird wieder die Bereichseinteilung gemäß Figur 3 aktiviert.

Ein neues Muting wird dann aktiviert, kurz bevor ein neues nicht sicherheitskritisches Objekt in den Überwachungsbereich einfährt, was in Figur 5 dargestellt ist. Das nicht sicherheitskritische Objekt ist in diesem Fall von einer größeren Kiste 20 gebildet. Daran angepasst wird als Muting-Bereich ein größerer Bereich B2 aktiviert. Der Bereich B3 ist entsprechend kleiner.

Die Durchführung des Mutings ist analog zur Situation gemäß Figur 4.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Ausgangsstruktur
- (10): Überwachungseinrichtung
- (11): Anlage
- (12): Maschine
- (13): Förderband
- (14): Sicherheitssteuerung
- (15): Leitung
- (16): Umzäunung
- (17): Datenverbindung
- (18): Funktionsbaustein
- (19): Kiste
- (20): Kiste
- (B1): Bereich
- (B2): Bereich
- (B): Bereich
- (S1-12): Strahlachse
- (I): Pfeil

## Patentansprüche

1. Überwachungseinrichtung (10) mit einem Sicherheitssensor in Form eines Lichtvorhangs (1) und mit einer Sicherheitssteuerung (14), die über eine sichere Datenverbindung (17) mit dem Lichtvorhang (1) verbunden ist, wobei der Lichtvorhang (1) eine Reihenanordnung von Strahlachsen (S1-S12) bildenden Sender-Empfänger-Paaren aufweist, mittels derer ein Überwachungsbereich überwacht wird, **dadurch gekennzeichnet, dass** in der Sicherheitssteuerung (14) ein Funktionsbaustein (18) vorhanden ist, dass Konfigurationsmittel vorhanden sind, mittels derer Bereiche (B1, B2, B3) des Lichtvorhangs (1) mit jeweils einer vorgegebenen Anzahl von Strahlachsen (S1-S12) vorgegeben werden, wobei diese Bereiche (B1, B2, B3) als Eingangssignale dem Funktionsbaustein (18) zugeführt sind, dass der Lichtvorhang (1) für jeden Bereich (B1, B2, B3) ein Ausgangssignal erzeugt, wobei die Ausgangssignale über die sichere Datenverbindung (17) in den Funktionsbaustein (18) eingelesen werden, und dass der Funktionsbaustein (18) abhängig von den Ausgangssignalen ein Schaltsignal generiert.

2. Überwachungseinrichtung (10) nach Anspruch 1, **dadurch gekennzeichnet, dass** zwischen dem Lichtvorhang (1) und dem Funktionsbaustein (18) zyklisch Prozessdaten ausgetauscht werden.

3. Überwachungseinrichtung (10) nach Anspruch 2, **dadurch gekennzeichnet, dass** der Funktionsbaustein (18) zyklisch Daten als Ausgangsdaten an den Lichtvorhang (1) sendet und dass der Funktionsbaustein (18) zyklisch Daten als Eingangsdaten vom Lichtvorhang (1) empfängt.

4. Überwachungseinrichtung (10) nach Anspruch 3, **dadurch gekennzeichnet, dass** jeder Bereich (B1, B2, B3) aus einer Anzahl aufeinanderfolgenden Strahlachsen (S1-S12) besteht, wobei die Bereiche (B1, B2, B3) überlappend oder nicht überlappend sind.

5. Überwachungseinrichtung (10) nach einem der Ansprüche 1 bis 4, **dadurch gekennzeichnet, dass** den Bereichen (B1, B2, B3) jeweils eine Funktion zugeordnet ist.

6. Überwachungseinrichtung (10) nach Anspruch 5, **dadurch gekennzeichnet, dass** die Funktion eines Bereichs (B1, B2, B3) von einer Standard-Funktion, einem Muting, einem partiellen Muting, einer reduzierten Auflösung, einem festen Blanking oder einem variablen Blanking gebildet ist.

7. Überwachungseinrichtung (10) nach einem der Ansprüche 2 bis 6, **dadurch gekennzeichnet, dass** die Konfigurationsmittel von der Sicherheitssteuerung (14) gebildet sind, wobei mittels Prozessdaten eine Parametrierung des Lichtvorhangs (1) durchgeführt wird.

8. Überwachungseinrichtung (10) nach einem der Ansprüche 1 bis 6, **dadurch gekennzeichnet, dass** die Konfigurationsmittel von einem anwenderprogrammierbaren Konfigurationsprogramm gebildet sind, mittels dessen eine Parametrierung des Lichtvorhangs (1) dadurch durchgeführt wird, dass ein Parametersatz in eine Speichereinheit des Lichtvorhangs (1) eingelesen wird.

9. Überwachungseinrichtung (10) nach einem der Ansprüche 7 oder 8, **dadurch gekennzeichnet, dass** durch eine Parametrierung Größen und Funktionen von Bereichen (B1, B2, B3) vorgegeben werden.

10. Überwachungseinrichtung (10) nach einem der Ansprüche 1 bis 9, **dadurch gekennzeichnet, dass** jedem Bereich (B1, B2, B3) eine Kennung zugeordnet ist, wobei die Kennungen in den Funktionsbaustein (18) eingelesen werden.

11. Überwachungseinrichtung (10) nach einem der Ansprüche 1 bis 10, **dadurch gekennzeichnet, dass** von der Sicherheitssteuerung (14) Muting-Steuersignale in den Funktionsbaustein (18) eingelesen werden, wobei abhängig von den Muting-Steuersignalen in dem Funktionsbaustein (18) ein Muting des Lichtvorhangs (1) durchgeführt wird.

12. Überwachungseinrichtung (10) nach Anspruch 11, **dadurch gekennzeichnet, dass** die Muting-Steuersignale in der Sicherheitssteuerung (14) oder von an die Sicherheitssteuerung (14) angeschlossenen externen Sensoren generiert werden.

13. Überwachungseinrichtung (10) nach einem der Ansprüche 11 oder 12, **dadurch gekennzeichnet, dass** mit dem Lichtvorhang (1) ein Gefahrenbereich an einer Anlage (11), die von der Sicherheitssteuerung (14) gesteuert wird, überwacht wird, und dass als Sicherheitsfunktion die Anlage (11) stillgesetzt wird.

14. Überwachungseinrichtung (10) nach einem der Ansprüche 1 bis 13, **dadurch gekennzeichnet, dass** die sichere Datenverbindung (17) von einem sicheren Feldbus auf Ethernet-Basis, von einer IO-Link-Safety Kommunikation oder einer AS-i Safety Kommunikation gebildet ist.

15. Verfahren zum Betrieb einer Überwachungseinrichtung (10) mit einem Sicherheitssensor in Form eines Lichtvorhangs (1) und mit einer Sicherheitssteuerung (14), die über eine sichere Datenverbindung (17) mit dem Lichtvorhang (1) verbunden ist, wobei der Lichtvorhang (1) eine Reihenanordnung von Strahlachsen (S1-S12) bildenden Sender-Empfänger-Paaren aufweist, mittels derer ein Überwachungsbereich überwacht wird, **dadurch gekennzeichnet, dass** in der Sicherheitssteuerung (14) ein Funktionsbaustein (18) vorhanden ist, dass Konfigurationsmittel vorhanden sind, mittels derer Bereiche (B1, B2, B3) des Lichtvorhangs (1) mit jeweils einer vorgegebenen Anzahl von Strahlachsen (S1-S12) vorgegeben werden, dass der Lichtvorhang (1) für jeden Bereich (B1, B2, B3) ein Ausgangssignal erzeugt, wobei die Ausgangssignale über die sichere Datenverbindung (17) in den Funktionsbaustein (18) eingelesen werden, und dass der Funktionsbaustein (18) abhängig von den Ausgangssignalen ein Schaltsignal generiert.
